(19) Europäisches Patentamt
European Patent Office
Office européen des brevets

(11) EP 0 626 135 B1

(12) EUROPÄISCHE PATENTSCHRIFT

(45) Veröffentlichungstag und Bekanntmachung des Hinweises auf die Patenterteilung:
**26.03.1997 Patentblatt 1997/13**

(21) Anmeldenummer: **94105879.4**

(22) Anmeldetag: **15.04.1994**

(51) Int. Cl.6: **A01N 37/24**
// (A01N37/24, 59:20, 59:02, 57:12, 55:02, 47:40, 47:38, 47:34, 47:26, 47:18, 47:04, 43:76, 43:74, 43:66, 43:653, 43:40, 43:36, 43:32, 37:34, 37:32)

(54) **Fungizide Wirkstoffkombinationen**
Fungicidal compositions
Compositions fongicides

(84) Benannte Vertragsstaaten:
**BE CH DE ES FR GB IT LI NL PT**

(30) Priorität: **28.04.1993 DE 4313867**

(43) Veröffentlichungstag der Anmeldung:
**30.11.1994 Patentblatt 1994/48**

(73) Patentinhaber: **BAYER AG**
**51368 Leverkusen (DE)**

(72) Erfinder:
- **Brandes, Wilhelm Dr.**
**D-42799 Leichlingen (DE)**
- **Dehne, Heinz-Wilhelm Dr.**
**D-40789 Monheim (DE)**
- **Dutzmann, Stefan Dr.**
**D-40721 Hilden (DE)**
- **Kuck, Karl-Heinz Dr.**
**D-40764 Langenfeld (DE)**
- **Krüger, Bernd-Wieland Dr.**
**D-51467 Bergisch Gladbach (DE)**

(56) Entgegenhaltungen:
**EP-A- 0 339 418**
**EP-A- 0 416 365**
**DE-A- 3 431 856**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Rank Xerox (UK) Business Services
2.14.1/3.4

## Beschreibung

Die vorliegende Anmeldung betrifft neue Wirkstoffkombinationen, die aus einer Verbindung der Formel I

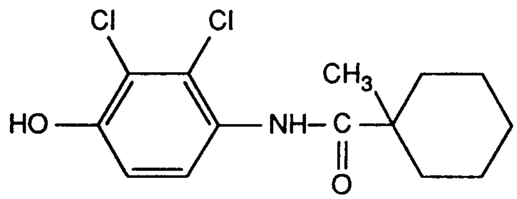

(I)

einerseits und weiteren bekannten fungiziden Wirkstoffen andererseits bestehen und sehr gut zur Bekämpfung von phytopathogenen Pilzen geeignet sind.

Es ist bereits bekannt, daß die Verbindungen der Formel (I) fungizide Eigenschaften besitzt (vgl. EP-A 339 418). Die Wirksamkeit dieses Stoffes ist gut; sie läßt jedoch bei niedrigen Aufwandmengen in manchen Fällen zu wünschen übrig.

Ferner ist schon bekannt, daß zahlreiche Azol-Derivate, aromatische Carbonsäure-Derivate, Morpholin-Verbindungen und andere Heterocyclen zur Bekämpfung von Pilzen eingesetzt werden können (vgl. K.H. Büchel "Pflanzenschutz und Schädlingsbekämpfung" Seiten 87, 136, 140, 141 und 146 bis 153, Georg Thieme Verlag, Stuttgart 1977). Die Wirkung der betreffenden Stoffe ist aber bei niedrigen Aufwandmengen nicht immer befriedigend.

Es wurde nun gefunden, daß die neuen Wirkstoffkombinationen aus einer Verbindung der Formel I

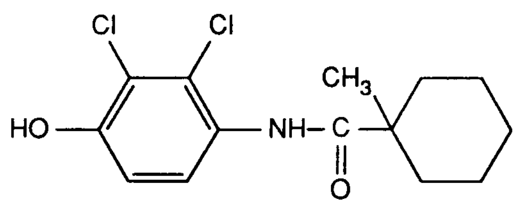

(I)

und

(A) Dichlofluanid der Formel

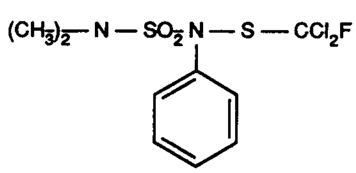

(II)

und/oder

(B) Tolylfluanid der Formel

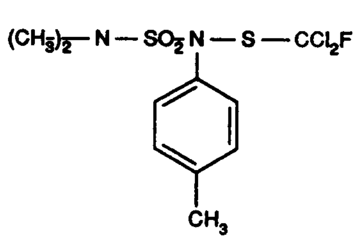

(III)

und/oder

(C) Tetrachlor-isophthalo-dinitril der Formel

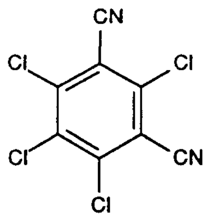

(IV)

(CHLOROTHALONIL)

und/oder

(D) Propineb der Formel

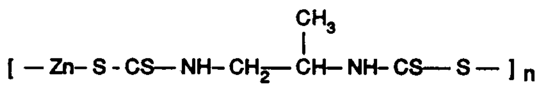

(V)

und/oder

(E) Tetramethyl-thiuram-disulfid der Formel

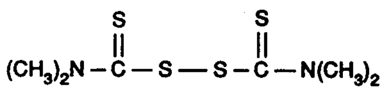

(VI)

(THIRAM)

und/oder

(F) Mancozeb der Formel

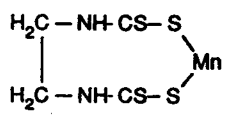

(VI)

und/oder

(G) Anilazin der Formel

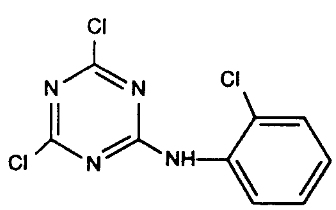

(VII)

und/oder

(H) Kupfer-Oxychloride
und/oder

(I) Captan der Formel

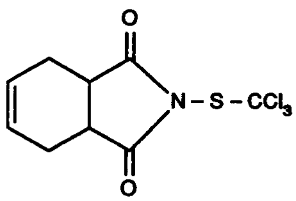

(VIII)

und/oder

(K) einem Morpholin-Derivat der Formel

(Dimetomorph)

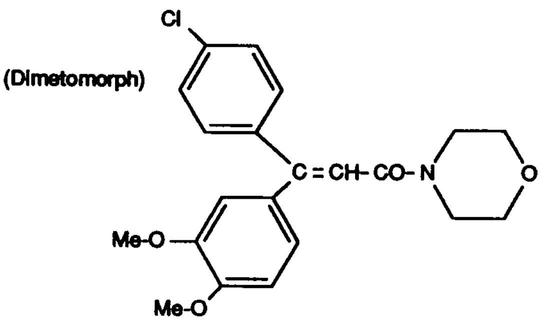

(IX)

und/oder

(L) Dithianon der Formel

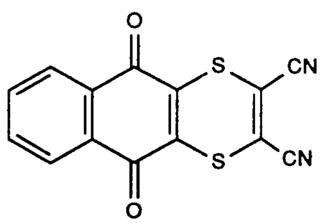

(X)

und/oder

(M) Phaltan der Formel

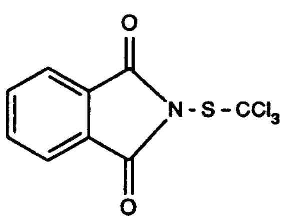

(XI)

und/oder

(N) Cymoxanil der Formel

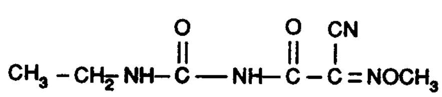

(XII)

und/oder

(O) Benzimidazol-2-carbamidsäuremethylester der Formel

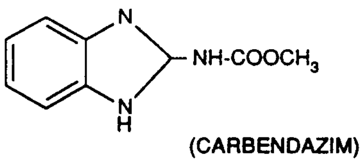

(CARBENDAZIM)

(XIII)

und/oder

(P) Fosetyl der Formel

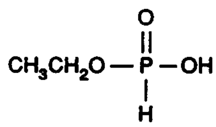

(XIV)

bzw. dessen Aluminium-Addukt
und/oder

(Q) Metalaxyl der Formel

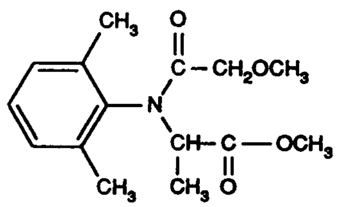

(XV)

und/oder

(R) Oxadixyl der Formel

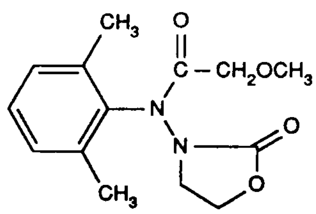

(XVI)

und/oder

(S) Fluazinam der Formel

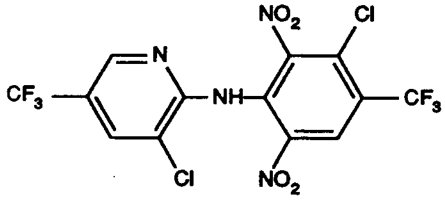

(XVII)

und/oder

(T) 1-(4-Chlorphenyl)-4,4-dimethyl-3-(1,2,4-triazol-1-yl-ethyl)-pentan-3-ol der Formel

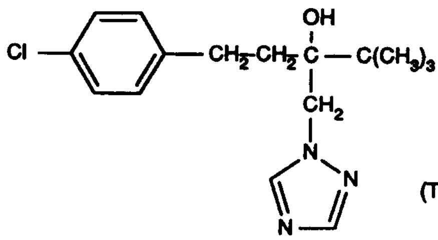

(XVIII)

(TEBUCONAZOLE)

und/oder

(U) einem Azol-Derivat der Formel

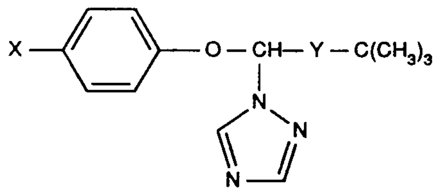

(XIX)

(XIX) X = Cl; Y = -CH(OH)- (Triadimenol)

(XIX) X = 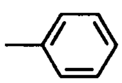 ; Y = -CH(OH)- (Bitertanol)

(XIX) X = Cl; Y = $\overset{O}{\overset{\|}{-C-}}$ (Triadimefon)

und/oder

(V) einem Azol-Derivat aus der Gruppe

a) Difenconazole
b) Penconazole
c) Flusilazole
d) Hexaconazole
e) Myclobutanil
f) Prochloraz

und/oder

(W) Metiram
und/oder

(X) Pyrimethanil
und/oder

(Y) Diethofencarb und/oder

(Z) Mepanipyrim
und/oder

(α) Phenylpyrrol
und/oder

(β) Iprodione
und/oder

(γ) Vinclozolin
und/oder

(δ) Procymidone
und/oder

(ε) Benomyl
und/oder

($\overline{\omega}$) Thiophanatmethyl
und/oder

(Π) Schwefel
und/oder

(η) Verbindungen der Formeln

a) 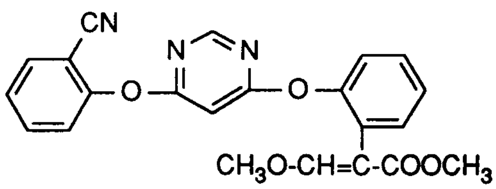

b) 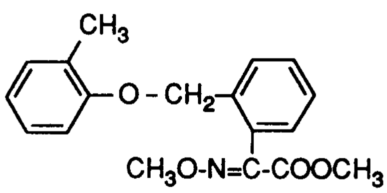

sehr gute fungizide Eigenschaften besitzen.

Der Wirkstoff der Formel (I) ist bekannt (EP-A-339 418). Die in den erfindungsgemäßen Kombinationen außerdem vorhandenen Komponente sind ebenfalls bekannt.

Die erfindungsgemäßen Wirkstoffkombinationen enthalten neben dem Wirkstoff der Formel (I) mindestens einen Wirkstoff von den Verbindungen der Gruppen (A) bis (Π). Sie können darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)

| | |
|---|---|
| 0,5 bis | 50 Gewichtsteile, vorzugsweise |
| 0,5 bis | 10 Gewichtsteile an Wirkstoff **Propineb (D)** |
| 0,5 bis | 50 Gewichtsteile, vorzugsweise |
| 0,5 bis | 10 Gewichtsteile an Wirkstoff **Mancozeb (F)** |
| 0,5 bis | 50 Gewichtsteile, vorzugsweise |
| 0,5 bis | 10 Gewichtsteile an Wirkstoff **TMTD (E)** |

| | |
|---|---|
| 0,5 bis | 50 Gewichtsteile, vorzugsweise |
| 0,5 bis | 10 Gewichtsteile an Wirkstoff **Metiram (W)** |
| | |
| 0,5 bis | 50 Gewichtsteile, vorzugsweise |
| 0,5 bis | 20 Gewichtsteile an Wirkstoff **Dichlofluanid (A)** |
| 0,5 bis | 50 Gewichtsteile, vorzugsweise |
| 0,5 bis | 20 Gewichtsteile an Wirkstoff **Tolylfluanid (B)** |
| 0,5 bis | 50 Gewichtsteile, vorzugsweise |
| 0,5 bis | 20 Gewichtsteile an Wirkstoff **Phaltan (M)** |
| 0,5 bis | 50 Gewichtsteile, vorzugsweise |
| 0,5 bis | 20 Gewichtsteile an Wirkstoff **Captan (I)** |
| | |
| 1 bis | 50 Gewichtsteile, vorzugsweise |
| 1 bis | 20 Gewichtsteile an Wirkstoff **Cu-Oxichlorid (H)** |
| 1 bis | 50 Gewichtsteile, vorzugsweise |
| 1 bis | 20 Gewichtsteile an Wirkstoff **Schwefel** (Π) |
| | |
| 0,5 bis | 50 Gewichtsteile, vorzugsweise |
| 0,5 bis | 10 Gewichtsteile an Wirkstoff **Anilazine (G)** |
| 0,5 bis | 50 Gewichtsteile, vorzugsweise |
| 0,5 bis | 10 Gewichtsteile an Wirkstoff **Chlorothalonil (C)** |
| 0,5 bis | 50 Gewichtsteile, vorzugsweise |
| 0,5 bis | 10 Gewichtsteile an Wirkstoff **Dithianon (L)** |
| | |
| 0,1 bis | 10 Gewichtsteile, vorzugsweise |
| 0,5 bis | 5 Gewichtsteile an Wirkstoff **Fluazinam (S)** |
| 0,1 bis | 10 Gewichtsteile, vorzugsweise |
| 0,5 bis | 5 Gewichtsteile an Wirkstoff **Pyrimetanil (X)** |
| 0,1 bis | 10 Gewichtsteile, vorzugsweise |
| 0,5 bis | 5 Gewichtsteile an Wirkstoff **Diethofencarb (Y)** |
| 0,1 bis | 10 Gewichtsteile, vorzugsweise |
| 0,5 bis | 5 Gewichtsteile an Wirkstoff **Mepanipyrin (Z)** |
| 0,1 bis | 10 Gewichtsteile, vorzugsweise |
| 0,5 bis | 5 Gewichtsteile an Wirkstoff **Phenylpyrrol (Saphire)** (α) |
| | |
| 0,1 bis | 20 Gewichtsteile, vorzugsweise |
| 0,5 bis | 10 Gewichtsteile an Wirkstoff **Iprodione** (β) |
| 0,1 bis | 20 Gewichtsteile, vorzugsweise |
| 0,5 bis | 10 Gewichtsteile an Wirkstoff **Vinclozolin** (γ) |
| 0,1 bis | 20 Gewichtsteile, vorzugsweise |
| 0,5 bis | 10 Gewichtsteile an Wirkstoff **Procymidone** (δ) |
| | |
| 0,1 bis | 10 Gewichtsteile, vorzugsweise |
| 0,25 bis | 5 Gewichtsteile an Wirkstoff **Benomyl** (ε) |
| 0,1 bis | 10 Gewichtsteile, vorzugsweise |
| 0,25 bis | 5 Gewichtsteile an Wirkstoff **Carbendazim (O)** |
| 0,1 bis | 10 Gewichtsteile, vorzugsweise |
| 0,25 bis | 5 Gewichtsteile an Wirkstoff **Thiopanatmethyl**(ϖ) |
| | |
| 0,1 bis | 10 Gewichtsteile, vorzugsweise |
| 0,25 bis | 5 Gewichtsteile an Wirkstoff **Cymoxanil (N)** |
| 0,1 bis | 10 Gewichtsteile, vorzugsweise |
| 0,25 bis | 5 Gewichtsteile an Wirkstoff **Metalaxyl (Q)** |
| 0,1 bis | 10 Gewichtsteile, vorzugsweise |
| 0,25 bis | 5 Gewichtsteile an Wirkstoff **Oxadixyl (R)** |
| | |
| 0,1 bis | 10 Gewichtsteile, vorzugsweise |
| 0,2 bis | 5 Gewichtsteile an Wirkstoff **Dimethomorph (K)** |
| 0,1 bis | 20 Gewichtsteile, vorzugsweise |

| | |
|---|---|
| 0,2 bis | 10 Gewichtsteile an Wirkstoff **Al-Fosethyl (P)** |

| | |
|---|---|
| 0,01 bis | 10 Gewichtsteile, vorzugsweise |
| 0,025 bis | 5 Gewichtsteile an Wirkstoff **Tebuconazole (T)** |
| 0,01 bis | 10 Gewichtsteile, vorzugsweise |
| 0,025 bis | 5 Gewichtsteile an Wirkstoff **Triadimefon (U XIXc)** |
| 0,01 bis | 10 Gewichtsteile, vorzugsweise |
| 0,025 bis | 5 Gewichtsteile an Wirkstoff **Triadimenol (U XIXa)** |
| 0,01 bis | 10 Gewichtsteile, vorzugsweise |
| 0,025 bis | 5 Gewichtsteile an Wirkstoff **Bitertanol (U XIXb)** |
| 0,01 bis | 10 Gewichtsteile, vorzugsweise |
| 0,025 bis | 5 Gewichtsteile an Wirkstoff **Difenconazole (Va)** |
| 0,01 bis | 10 Gewichtsteile, vorzugsweise |
| 0,025 bis | 5 Gewichtsteile an Wirkstoff **Penconazole (Vb)** |
| 0,01 bis | 10 Gewichtsteile, vorzugsweise |
| 0,025 bis | 5 Gewichtsteile an Wirkstoff **Flusilazole (Vc)** |
| 0,01 bis | 10 Gewichtsteile, vorzugsweise |
| 0,025 bis | 5 Gewichtsteile an Wirkstoff **Hexaconazole (Vd)** |
| 0,01 bis | 10 Gewichtsteile, vorzugsweise |
| 0,025 bis | 5 Gewichtsteile an Wirkstoff **Myclobutanil (Ve)** |
| 0,01 bis | 10 Gewichtsteile, vorzugsweise |
| 0,025 bis | 5 Gewichtsteile an Wirkstoff **Prochloraz (Vf)** |
| 0,01 bis | 10 Gewichtsteile, vorzugsweise |
| 0,025 bis | 5 Gewichtsteile an Wirkstoff **der Formel (η a)** |
| 0,01 bis | 10 Gewichtsteile, vorzugsweise |
| 0,025 bis | 5 Gewichtsteile an Wirkstoff **der Formel (η b)** |

Die erfindungsgemäßen Wirkstoffkombinationen besitzen sehr gute fungizide Eigenschaften und lassen sich vor allem zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Cochliobolus, Pyrenophora und Leptosphaeria, und gegen Pilzbefall an Gemüse, Wein und Obst, beispielsweise gegen Venturia an Äpfeln, Botrytis an Bohnen und Phytophthora an Tomaten.

Die gute Pflanzenverträglichkeit der Wirkstoffkombinationen in den zur Bekämpfung von Pflanzenkranheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Tragerstoffen sind solche Flüssigkeiten gemeint, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und

Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50g je Kilogramm Saatgut, vorzugsweise 0,01 bis 10g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22,1967) wie folgt berechnet werden:

Wenn

X den Wirkungsgrad, ausgedrückt in % der unbehandelten Kontrolle, beim Einsatz des Wirkstoffes A in einer Konzentration von m ppm,

Y den Wirkungsgrad, ausgedrückt in % der unbehandelten Kontrolle, beim Einsatz des Wirkstoffes B in einer Konzentration von m ppm,

E den erwarteten Wirkungsgrad, ausgedrückt in % der unbehandelten Kontrolle, beim Einsatz des Wirkstoffes A und B in einer Konzentrationen von m und n ppm bedeutet,

dann ist

$$E = X + Y - \frac{X \cdot Y}{100} .$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E):

**Beispiel 1**

**Botrytis-Test (Bohne) / protektiv**

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit besprüht man junge Pflanzen mit der Wirkstoffzubereitung bis zur Tropfnässe. Nach Antrocknen des Spritzbelages werden auf jedes Blatt 2 kleine mit Botrytis cinerea bewachsene Agarstückchen aufgelegt. Die inokulierten Pflanzen werden in einer abgedunkelten, feuchten Kammer bei 20°C aufgestellt.

3 Tage nach der Inokulation wird die Größe der Befallsflecken auf den Blättern ausgewertet.

Um Synergismus zwischen den in diesem Versuch verwendeten Wirkstoffen aufzuzeigen, wurden die Resultate nach der von Colby beschriebenen Methode (s.o.) ausgewertet.

Wirkstoffe, Wirkstoffkonzentrationen und Versuchsergebnisse gehen aus den folgenden Tabellen hervor.

## Tabelle 1

**Botrytis-Test (Bohne) / protektiv**

| Wirkstoff | Wirkstoffkonzentration in ppm | Wirkungsgrad in % der unbehandelten Kontrolle |
|---|---|---|
| (I)<br>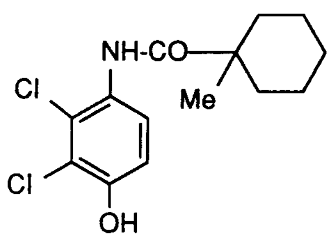 | 5 | 51 |
| Dichlofluanid<br>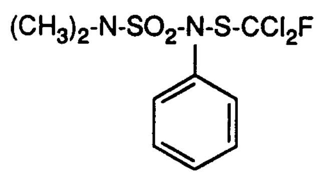 | 100 | 32 |
| **Erfindungsgemäße Mischung** | | |
| **(I) + Dichlofluanid** | **5 + 100** | **89** |
| **Erwartungswert, berechnet nach der Colby-Formel (s.o.)** | | **67** |

**Tabelle 1**

**Botrytis-Test (Bohne) / protektiv**

| Wirkstoff | Wirkstoffkonzentration in ppm | Wirkungsgrad in % der unbehandelten Kontrolle |
|---|---|---|
| (I) | 5 | 51 |
| 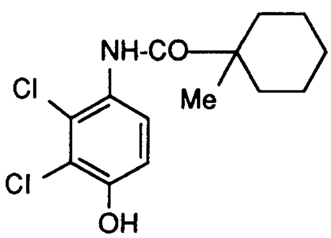 | | |
| Procymidone | 50 | 44 |
| 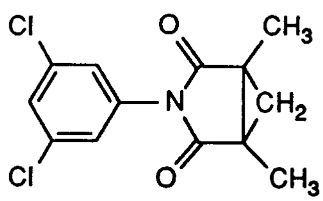 | | |

**Erfindungsgemäße Mischung**

| | | |
|---|---|---|
| (I) + Procymidone | 5 + 50 | 91 |
| Erwartungswert, berechnet nach der Colby-Formel (s.o.) | | 73 |

## Tabelle 1

**Botrytis-Test (Bohne) / protektiv**

| Wirkstoff | Wirkstoff-konzentration in ppm | Wirkungsgrad in % der unbehandelten Kontrolle |
|---|---|---|
| (I) | 5 | 51 |
| 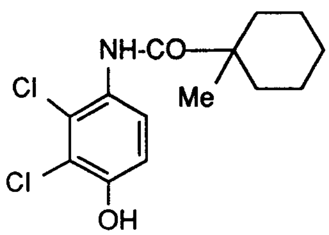 | | |
| **Phaltan** | **50** | **0** |
| 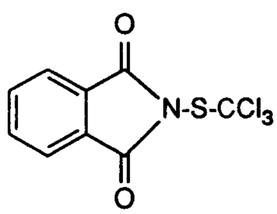 | | |
| **Erfindungsgemäße Mischung** | | |
| **(I) + Phaltan** | **5 + 50** | **73** |
| **Erwartungswert, berechnet nach der Colby-Formel (s.o.)** | | 51 |

**Tabelle 1**

**Botrytis-Test (Bohne) / protektiv**

| Wirkstoff | Wirkstoff-konzentration in ppm | Wirkungsgrad in % der unbehandelten Kontrolle |
|---|---|---|
| (I) 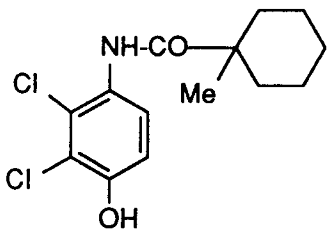 | 5 | 51 |
| Fluazinam 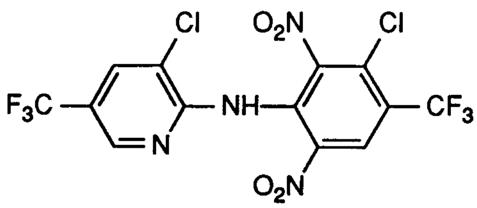 | 5 | 20 |

**Erfindungsgemäße Mischung**

| | | |
|---|---|---|
| (I) + Fluazinam | 5 + 5 | 99 |
| **Erwartungswert, berechnet nach der Colby-Formel (s.o.)** | | 61 |

## Tabelle 1

**Botrytis-Test (Bohne) / protektiv**

| Wirkstoff | Wirkstoffkonzentration in ppm | Wirkungsgrad in % der unbehandelten Kontrolle |
|---|---|---|
| (I) 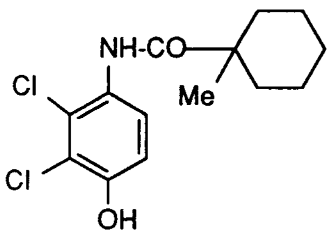 | 5 | 51 |
| Pyrimethanil 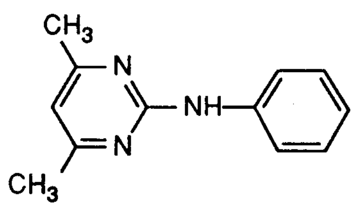 | 10 | 0 |

**Erfindungsgemäße Mischung**

| | | |
|---|---|---|
| (I) + Pyrimetanil | 5 + 10 | 93 |
| **Erwartungswert, berechnet nach der Colby-Formel (s.o.)** | | 51 |

## Tabelle 1

**Botrytis-Test (Bohne) / protektiv**

| Wirkstoff | Wirkstoffkonzentration in ppm | Wirkungsgrad in % der unbehandelten Kontrolle |
|---|---|---|
| (I) 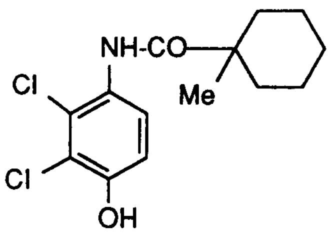 | 5 | 51 |
| Carbendazim 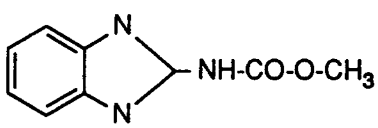 | 5 | 52 |

**Erfindungsgemäße Mischung**

| | | |
|---|---|---|
| (I) + Carbendazim | 5 + 5 | 87 |
| **Erwartungswert, berechnet nach der Colby-Formel (s.o.)** | | 76 |

**Tabelle 1**

**Botrytis-Test (Bohne) / protektiv**

| Wirkstoff | Wirkstoff-konzentration in ppm | Wirkungsgrad in % der unbehandelten Kontrolle |
|---|---|---|
| (I) 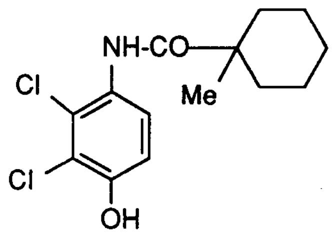 | 5 | 51 |
| Tolylfluanid 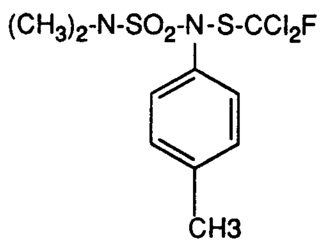 | 50 | 32 |
| **Erfindungsgemäße Mischung** | | |
| (I) + Tolylfluanid | 5 + 50 | 84 |
| Erwartungswert, berechnet nach der Colby-Formel (s.o.) | | 67 |

## Tabelle 1

**Botrytis-Test (Bohne) / protektiv**

| Wirkstoff | Wirkstoffkonzentration in ppm | Wirkungsgrad in % der unbehandelten Kontrolle |
|---|---|---|
| (I) 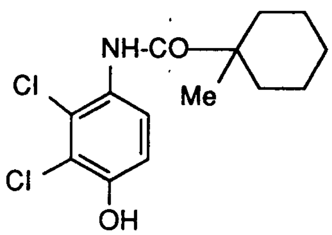 | 5 | 51 |
| Chlorothalonil 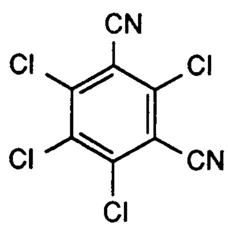 | 200 | 37 |
| **Erfindungsgemäße Mischung** | | |
| (I) + Chlorothalonil | 5 + 200 | 73 |
| **Erwartungswert, berechnet nach der Colby-Formel (s.o.)** | | 69 |

**Beispiel 2**

Leptosphaeria nodorum-Test (Weizen / protektiv

Lösungsmittel: 100 Gewichtsteile Dimethylformamid
Emulgator: 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit einer Sporensuspension von Leptosphaeria nodorum besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von 15°C und einer relativen Luftfeuchtigkeit von ca. 80 % aufgestellt.

10 Tage nach der Inokulation erfolgt die Auswertung.

Eine deutliche Überlegenheit in der Wirksamkeit gegenüber dem Stand der Technik zeigen bei diesem Test z.B. die Verbindungen gemäß folgender Herstellungsbeispiele:

**Tabelle 2**

**Leptosphaeria nodorum Test (Weizen) / protektiv**

| Wirkstoff | Wirkstoffkonzentration der Spritzbrühe in ppm | Wirkungsgrad in % der unbehandelten Kontrolle |
|---|---|---|
| Tebuconazole 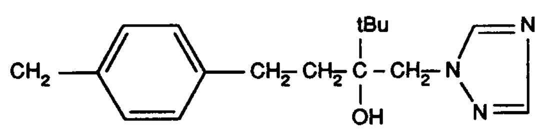 | 25 | 75 |
| (I) 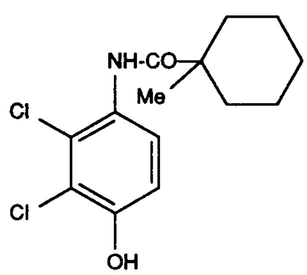 | | 0 |
| Tebuconazole + (I) (1:1) | 12,5 + 12,5 | 100 |

**Beispiel 3**

Erysiphe-Test (Gerste) / protektiv

Lösungsmittel: 10 Gewichtsteile N-Methyl-pyrrolidon
Emulgator: 0,6 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit einer Sporen von Erysiphe graminis f.sp. hordei bestäubt.

Die Pflanzen werden in einem Gewächshaus bei einer Temperatur von 20°C und einer relativen Luftfeuchtigkeit von ca 80 % aufgestellt, um die Entwicklung von Mehltaupusteln zu begünstigen.

7 Tage nach der Inokulation erfolgt die Auswertung.

Eine deutliche Überlegenheit in der Wirksamkeit gegenüber dem Stand der Technik zeigen bei diesem Test z.B. die Verbindungen gemäß folgender Herstellungsbeispiele:

**Tabelle 3**

**Erysiphe-Test (Gerste) / protektiv**

| Wirkstoff | Wirkstoff-konzentration in g/ha | Wirkungsgrad in % der unbehandelten Kontrolle |
| --- | --- | --- |
| (I) 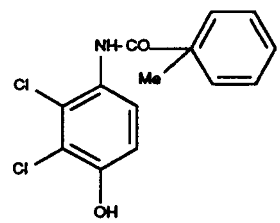 | 50 | 0 |
| (ηa) 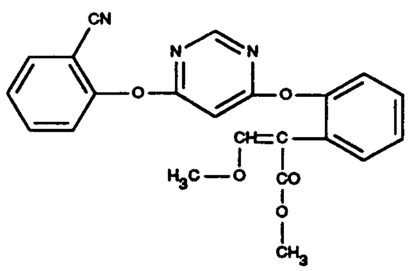 | 50 | 15 |
| (η b) 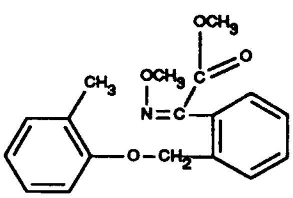 | 50 | 85 |
| <u>Erfindungsgemäße Mischung:</u> | | |
| (I) + (η b) (1,0:1) | 25 + 25 | 100 |
| (I) + (η a) (1,0:1) | 25 + 25 | 58 |

**Beispiel 4**

Erysiphe-Test (Weizen) / protektiv

Lösungsmittel: 10 Gewichtsteile N-Methyl-pyrrolidon
Emulgator: 0,6 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit einer Sporen von Erysiphe graminis f.sp. tritici bestäubt.

Die Pflanzen werden in einem Gewächshaus bei einer Temperatur von 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

Eine deutliche Überlegenheit in der Wirksamkeit gegenüber dem Stand der Technik zeigen bei diesem Test z.B. die Verbindungen gemäß folgender Herstellungsbeispiele:

**Tabelle 4**

**Erysiphe-Test (Weizen) / protektiv**

| Wirkstoff | Wirkstoff-konzentration in g/ha | Wirkungsgrad in % der unbehandelten Kontrolle |
|---|---|---|
| (I) 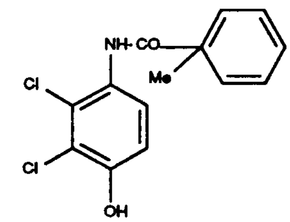 | 200<br>25 | 85<br>30 |
| (ηa) 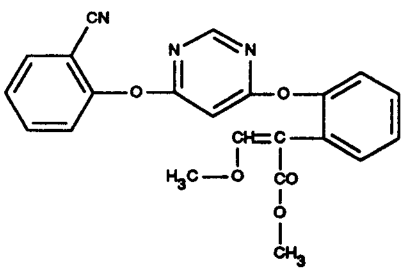 | 200 | 79 |
| 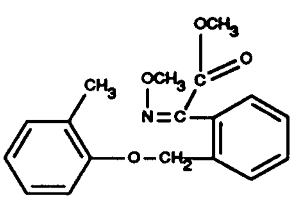 | 25 | 85 |
| Erfindungsgemäße Mischung:<br>(I) + (η b)<br>(1,0:1) | 12,5<br>+ 12,5 | 100 |
| (I) + (η a)<br>(1,0:1) | 100<br>+ 100 | 94 |

**Beispiel 5**

Erysiphe-Test (Weizen) / kurativ

| | |
|---|---|
| Lösungsmittel: | 10 Gewichtsteile N-Methyl-pyrrolidon |
| Emulgator: | 0,6 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit Sporen von Erysiphe graminis f.sp. tritici bestäubt. 48 Stunden nach der Inokulation werden die Pflanzen mit der Wirkstoffzubereitung taufeucht besprüht.

Die Pflanzen werden in einem Gewächshaus bei einer Temperatur von 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

Eine deutliche Überlegenheit in der Wirksamkeit gegenüber dem Stand der Technik zeigen bei diesem Test z.B. die Verbindungen gemäß folgender Herstellungsbeispiele:

## Tabelle 5

**Erysiphe-Test (Weizen) / kurativ**

| Wirkstoff | Wirkstoff-konzentration in g/ha | Wirkungsgrad in % der unbehandelten Kontrolle |
|---|---|---|
| (I) 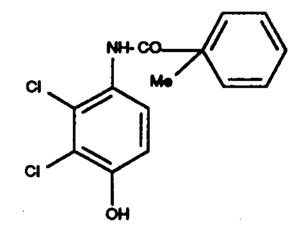 | 200 | 30 |
| (ηa) 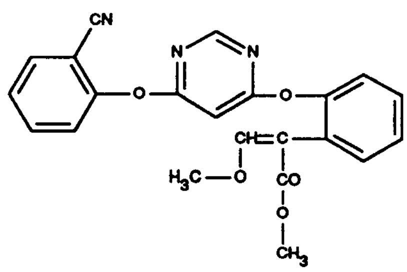 | 200 | 75 |
| Erfindungsgemäße Mischung: (I) + (η a) (1,0:1) | 100 + 100 | 96 |

**Beispiel 6**

Leptosphaeria nodorum-Test (Weizen)/ kurativ

Lösungsmittel: 10 Gewichtsteile N-Methyl-pyrrolidon
Emulgator: 0,6 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit einer Sporensuspension von Leptoshpaeria nodorum besprüht. Die Pflanzen verbleiben 48 Stunden bei 20°C und 100 % rel. Luftfeuchtigkeit in einer Inkubationskabine. Anschließend besprüht man die Pflanzen mit der Wirkstoffzubereitung taufeucht.

Die Pflanzen werden in einem Gewächshaus bei einer Temperatur von 15°C und einer relativen Luftfeuchtigkeit von ca. 80 % aufgestellt.

10 Tage nach der Inokulation erfolgt die Auswertung.

Eine deutliche Überlegenheit in der Wirksamkeit gegenüber dem Stand der Technik zeigen bei diesem Test z.B. die Verbindungen gemäß folgender Herstellungsbeispiele:

## Tabelle 6

### Leptosphaeria nodorum-Test (Weizen) / kurativ

| Wirkstoff | Wirkstoffkonzentration in g/ha | Wirkungsgrad in % der unbehandelten Kontrolle |
|---|---|---|
| (I) 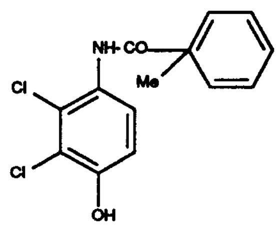 | 400 | 25 |
| (ηb) 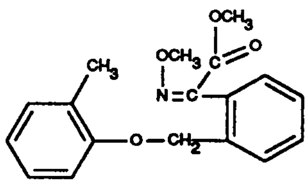 | 400 | 49 |
| Erfindungsgemäße Mischung: (I) + (η b) (1,0:1) | 200 + 200 | 81 |

**Beispiel 7**

Pyrenophora teres-Test (Gerste) / protektiv

Lösungsmittel: 10 Gewichtsteile N-Methyl-pyrrolidon
Emulgator: 0,6 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit einer Konidiensuspension von Pyrenophora teres besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von 20°C und einer relativen Luftfeuchtigkeit von ca. 80 % aufgestellt.

7 Tage nach der Inokulation erfolgt die Auswertung.

Eine deutliche Überlegenheit in der Wirksamkeit gegenüber dem Stand der Technik zeigen bei diesem Test z.B. die Verbindungen gemäß folgender Herstellungsbeispiele:

**Tabelle 7**

**Pyrenophora teres-Test (Gerste) / protektiv**

| Wirkstoff | Wirkstoffkonzentration in g/ha | Wirkungsgrad in % der unbehandelten Kontrolle |
|---|---|---|
| (I) 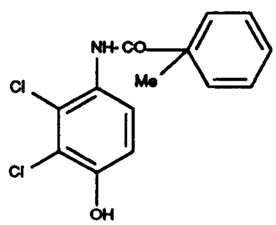 | 25 | 33 |
| (ηb) 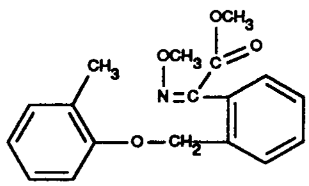 | 25 | 33 |
| Erfindungsgemäße Mischung: (I) + (η b) (1,0:1) | 12,5 + 12,5 | 75 |

**Patentansprüche**

1. Fungizide Mittel, gekennzeichnet durch einen Gehalt an einer Wirkstoffkombination bestehend aus einer Verbindung der Formel (I)

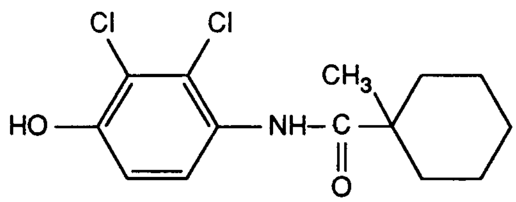

(I)

und

(A) Dichlofluanid der Formel

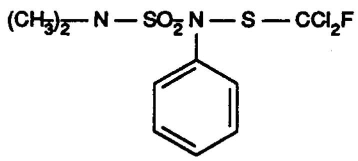

(II)

und/oder

(B) Tolylfluanid der Formel

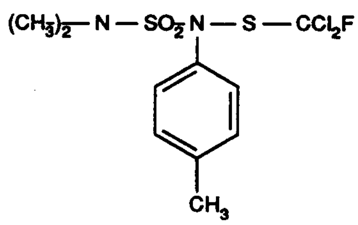

(III)

und/oder

(C) Tetrachlor-isophthalo-dinitril der Formel

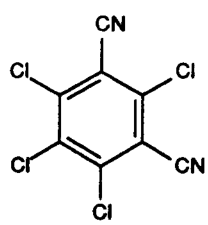

(IV)

(CHLOROTHALONIL)

und/oder

(D) Propineb der Formel

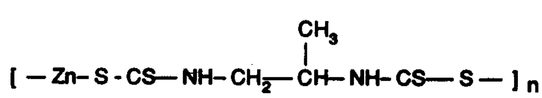

(V)

und/oder

(E) Tetramethyl-thiuram-disulfid der Formel

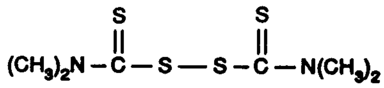

(VI)

(THIRAM)

und/oder

(F) Mancozeb der Formel

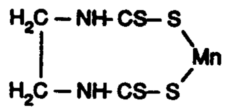

(VI)

und/oder

(G) Anilazin der Formel

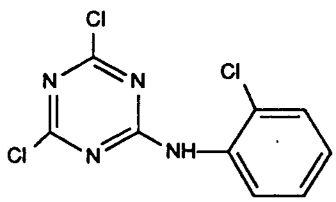

(VII)

und/oder

(H) Kupfer-Oxychloride
und/oder

(I) Captan der Formel

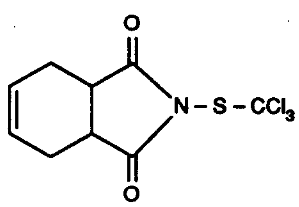

(VIII)

und/oder

(K) einem Morpholin-Derivat der Formel

(Dimetomorph)

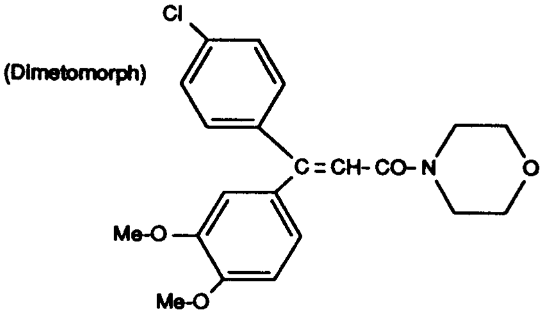

(IX)

und/oder

(L) Dithianon der Formel

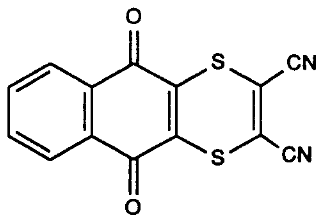

(X)

und/oder

(M) Phaltan der Formel

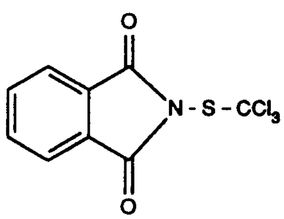

(XI)

und/oder

(N) Cymoxanil der Formel

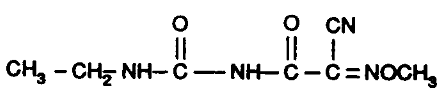

(XII)

und/oder

(O) Benzimidazol-2-carbamidsäuremethylester der Formel

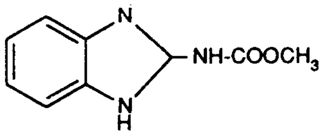

(XIII)

(Carbendazim)

und/oder

(P) Fosetyl der Formel

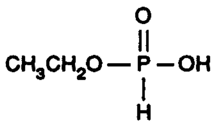

(XIV)

bzw. dessen Aluminium-Addukt

und/oder

(Q) Metalaxyl der Formel

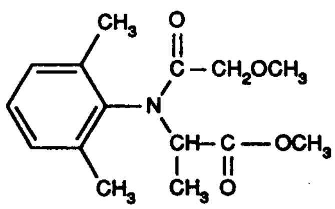

(XV)

und/oder

(R) Oxadixyl der Formel

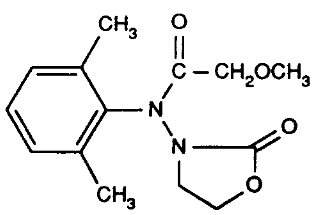

(XVI)

und/oder

(S) Fluazinam der Formel

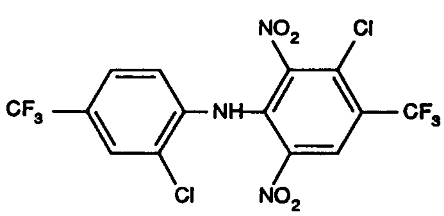

(XVII)

und/oder

(T) 1-(4-Chlorphenyl)-4,4-dimethyl-3-(1,2,4-triazol-1-yl-ethyl)-pentan-3-ol der Formel

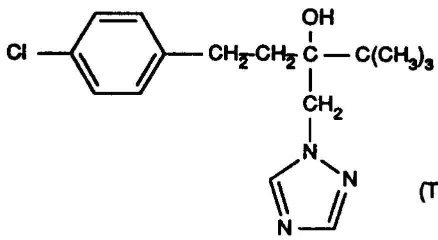

(XVIII)

(TEBUCONAZOLE)

und/oder

(U) einem Azol-Derivat der Formel

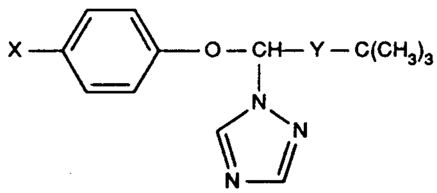

(XIX)

(XIX)= X = Cl; Y = -CH(OH)- (Triadimenol)

(XIX) X= 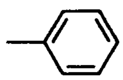 ; Y = -CH(OH)- (Bitertanol)

(XIX) X = Cl; Y = 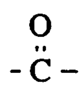 (Triadimefon)

und/oder

(V) einem Azol-Derivat aus der Gruppe

a) Difenconazole
b) Penconazole
c) Flusilazole
d) Hexaconazole
e) Myclobutanil
f) Prochloraz

und/oder

(W) Metiram
und/oder

(X) Pyrimethanil
und/oder

(Y) Diethofencarb
und/oder

(Z) Mepanipyrim
und/oder

(α) Phenylpyrrol
und/oder

(β) Iprodione
und/oder

(γ) Vinclozolin
und/oder

(δ) Procymidone
und/oder

(ε) Benomyl
und/oder

(ω̅) Thiophanatmethyl
und/oder

(Π) Schwefel
und/oder

(η) Verbindungen der Formeln

a) 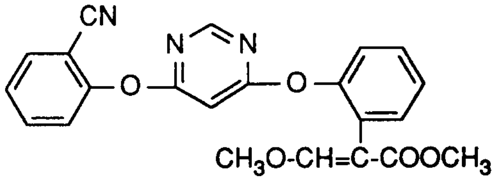

b) 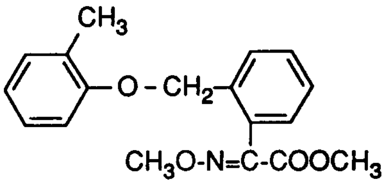

sehr gute fungizide Eigenschaften besitzen.

2. Mittel gemäß Anspruch 1, dadurch gekennzeichnet, daß in den Wirkstoffkombinationen das Gewichtsverhältnis von Wirkstoff der Formel (I)

- zu Wirkstoff der Gruppe (A) zwischen 1:0,5 und 1:50 liegt,
- zu Wirkstoff der Gruppe (B) zwischen 1:0,5 und 1:50 liegt,
- zu Wirkstoff der Gruppe (C) zwischen 1:0,5 und 1:50 liegt,
- zu Wirkstoff der Gruppe (D) zwischen 1:0,5 und 1:50 liegt,
- zu Wirkstoff der Gruppe (E) zwischen 1:0,5 und 1:50 liegt,
- zu Wirkstoff der Gruppe (F) zwischen 1:0,5 und 1:50 liegt,
- zu Wirkstoff der Gruppe (G) zwischen 1:0,5 und 1:50 liegt,
- zu Wirkstoff der Gruppe (H) zwischen 1:1 und 1:50 liegt,
- zu Wirkstoff der Gruppe (I) zwischen 1:0,5 und 1:50 liegt,
- zu Wirkstoff der Gruppe (K) zwischen 1:0,1 und 1:10 liegt,
- zu Wirkstoff der Gruppe (L) zwischen 1:0,5 und 1:50 liegt,
- zu Wirkstoff der Gruppe (M) zwischen 1:0,5 und 1:50 liegt,

- zu Wirkstoff der Gruppe (N) zwischen 1:0,1 und 1:10 liegt,
- zu Wirkstoff der Gruppe (O) zwischen 1:0,1 und 1:10 liegt,
- zu Wirkstoff der Gruppe (P) zwischen 1:0,1 und 1:20 liegt,
- zu Wirkstoff der Gruppe (Q) zwischen 1:0,1 und 1:10 liegt,
- zu Wirkstoff der Gruppe (R) zwischen 1:0,1 und 1:10 liegt,
- zu Wirkstoff der Gruppe (S) zwischen 1:0,1 und 1:10 liegt,
- zu Wirkstoff der Gruppe (T) zwischen 1:0,01 und 1:10 liegt,
- zu Wirkstoff der Gruppe (U) zwischen 1:0,01 und 1:10 liegt.
- zu Wirkstoff der Gruppe (V) zwischen 1:0,01 und 1:10 liegt,
- zu Wirkstoff der Gruppe (W) zwischen 1:0,5 und 1:50 liegt,
- zu Wirkstoff der Gruppe (X) zwischen 1:0,1 und 1:10 liegt,
- zu Wirkstoff der Gruppe (Y) zwischen 1:0,1 und 1:10 liegt,
- zu Wirkstoff der Gruppe (Z) zwischen 1:0,1 und 1:10 liegt,
- zu Wirkstoff der Gruppe (α) zwischen 1:0,1 und 1:10 liegt,
- zu Wirkstoff der Gruppe (β) zwischen 1:0,1 und 1:20 liegt,
- zu Wirkstoff der Gruppe (γ) zwischen 1:0,1 und 1:20 liegt,
- zu Wirkstoff der Gruppe (δ) zwischen 1:0,1 und 1:20 liegt,
- zu Wirkstoff der Gruppe (ε) zwischen 1:0,1 und 1:10 liegt,
- zu Wirkstoff der Gruppe ($\overline{\omega}$) zwischen 1:0,1 und 1:10 liegt,
- zu Wirkstoff der Gruppe (Π) zwischen 1:1 und 1:50 liegt.
- zu Wirkstoff der Gruppe (η) zwischen 1:0,01 und 1:10 liegt.

**3.** Verfahren zur Bekämpfung von Pilzen, dadurch gekennzeichnet, daß man Wirkstoffkombinationen gemäß Anspruch 1 auf die Pilze und/oder deren Lebensraum einwirken läßt.

**4.** Verwendung von Wirkstoffkombinationen gemäß Anspruch 1 zur Bekämpfung von Pilzen.

**5.** Verfahren zur Herstellung von fungiziden Mitteln, dadurch gekennzeichnet, daß man Wirkstoffkombinationen gemäß Anspruch 1 mit Streckmitteln und/oder oberflächenaktiven Stoffen vermischt.

## Claims

**1.** Fungicidal compositions, characterized in that they contain an active compound combination consisting of a compound of the formula (I)

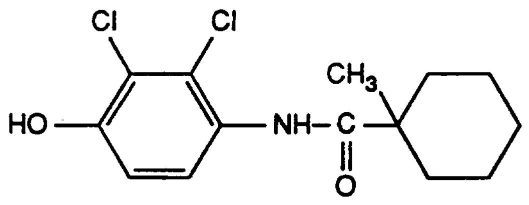

(I)

and

(A) dichlofluanid of the formula

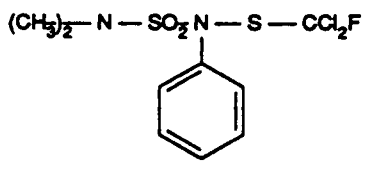

(II)

and/or

(B) tolylfluanid of the formula

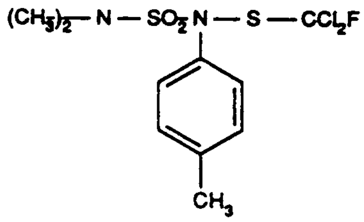

(III)

and/or

(C) tetrachloro-isophthalo-dinitrile of the formula

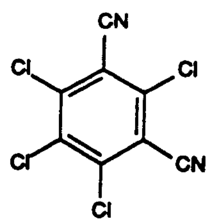

(IV)

(CHLOROTHALONIL)

and/or

(D) propineb of the formula

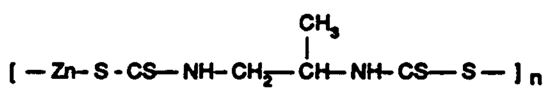

(V)

and/or

(E) tetramethyl-thiuram disulphide of the formula

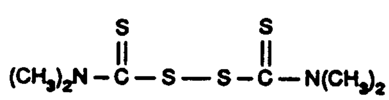

(VI)

(THIRAM)

and/or

(F) mancozeb of the formula

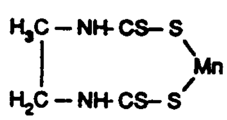

(VI)

and/or

(G) anilazine of the formula

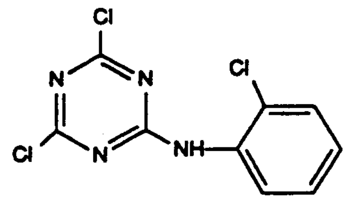

(VII)

and/or

(H) copper oxychloride
and/or

(I) captan of the formula

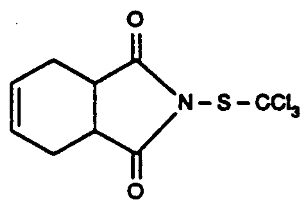

(VIII)

and/or

(K) a morpholine derivative of the formula

(dimethomorph)

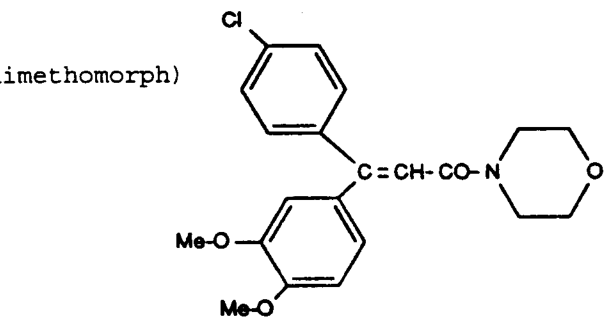

(IX)

and/or

(L) dithianone of the formula

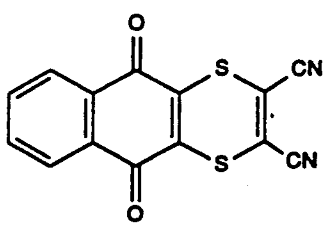

(X)

and/or

(M) phaltan of the formula

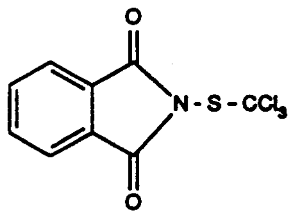

(XI)

and/or

(N) cymoxanil of the formula

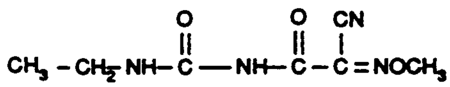

(XII)

and/or

(O) methyl benzimidazole-2-carbamate of the formula

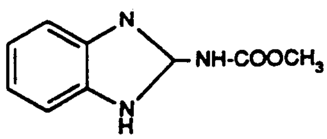

(XIII)

(carbendazim)

and/or

(P) fosetyl of the formula

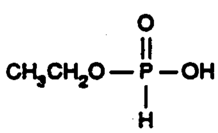

(XIV)

or its aluminium adduct

and/or

(Q) metalaxyl of the formula

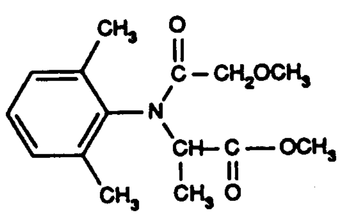

(XV)

and/or

(R) oxadixyl of the formula

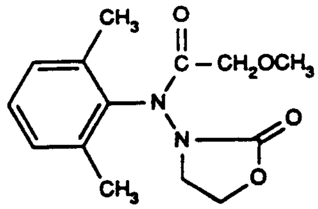

(XVI)

and/or

(S) fluazinam of the formula

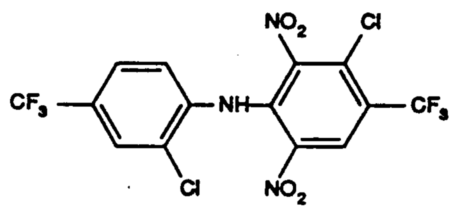

(XVII)

and/or

(T) 1-(4-chlorophenyl)-4,4-dimethyl-3-(1,2,4-triazol-1-yl-ethyl)-pentan-3-ol of the formula

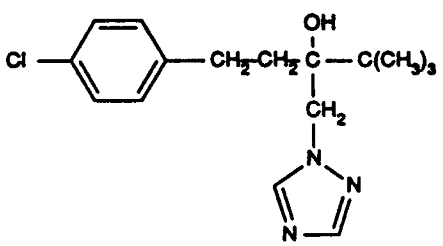

(XVIII)

(TEBUCONAZOLE)

and/or

(U) an azole derivative of the formula

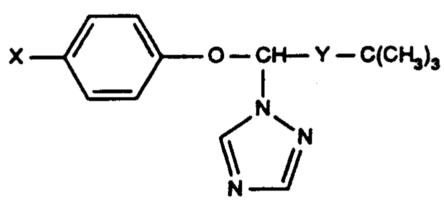

(XIX)

(XIX) = X=Cl; Y=-CH(OH)- (triadimenol)

(XIX) X= 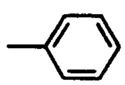 ; Y = -CH(OH)- (bitertanol)

(XIX) and/or X = Cl; Y = 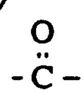 (triadimefon)

(V) an azole derivative from the group consisting of

a) difenconazole
b) penconazole
c) flusilazole
d) hexaconazole
e) myclobutanil
f) prochloraz

and/or

(W) metiram
and/or

(X) pyrimethanil
and/or

(Y) diethofencarb
and/or

(Z) mepanipyrim
and/or

(α) phenylpyrrole
and/or

(β) iprodione
and/or

(γ) vinclozoline
and/or

(δ) procymidone
and/or

(ε) benomyl
and/or

(ω) thiophanate-methyl
and/or

(Π) sulphur
and/or

(η) compounds of the formulae

a) 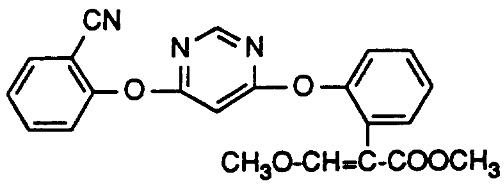

b) 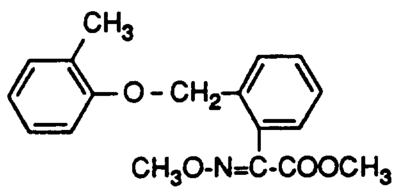

have very good fungicidal properties.

2. Composition according to Claim 1, characterized in that, in the active compound combinations, the weight ratio of active compound of the formula (I)

- to active compound of the group (A) is between 1:0.5 and 1:50,
- to active compound of the group (B) is between 1:0.5 and 1:50,
- to active compound of the group (C) is between 1:0.5 and 1:50,
- to active compound of the group (D) is between 1:0.5 and 1:50,
- to active compound of the group (E) is between 1:0.5 and 1:50,
- to active compound of the group (F) is between 1:0.5 and 1:50,
- to active compound of the group (G) is between 1:0.5 and 1:50,
- to active compound of the group (H) is between 1:1 and 1:50,
- to active compound of the group (I) is between 1:0.5 and 1:50,
- to active compound of the group (K) is between 1:0.1 and 1:10,
- to active compound of the group (L) is between 1:0.5 and 1:50,
- to active compound of the group (M) is between 1:0.5 and 1:50,
- to active compound of the group (N) is between 1:0.1 and 1:10,
- to active compound of the group (O) is between 1:0.1 and 1:10,
- to active compound of the group (P) is between 1:0.1 and 1:20,
- to active compound of the group (Q) is between 1:0.1 and 1:10,
- to active compound of the group (R) is between 1:0.1 and 1:10,
- to active compound of the group (S) is between 1:0.1 and 1:10,
- to active compound of the group (T) is between 1:0.01 and 1:10,
- to active compound of the group (U) is between 1:0.01 and 1:10,
- to active compound of the group (V) is between 1:0.01 and 1:10,
- to active compound of the group (W) is between 1:0.5 and 1:50,
- to active compound of the group (X) is between 1:0.1 and 1:10,
- to active compound of the group (Y) is between 1:0.1 and 1:10,
- to active compound of the group (Z) is between 1:0.1 and 1:10,
- to active compound of the group (α) is between 1:0.1 and 1:10,
- to active compound of the group (β) is between 1:0.1 and 1:20,
- to active compound of the group (γ) is between 1:0.1 and 1:20,
- to active compound of the group (δ) is between 1:0.1 and 1:20,
- to active compound of the group (ε) is between 1:0.1 and 1:10,
- to active compound of the group (ω) is between 1:0.1 and 1:10,
- to active compound of the group (π) is between 1:1 and 1:50.
- to active compound of the group (η) is between 1:0.01 and 1:10.

3. Process for the control of fungi, characterized in that active compound combinations according to Claim 1 are allowed to act on the fungi and/or their environment.

4. Use of active compound combinations according to Claim 1 for the control of fungi.

5. Process for the production of fungicidal compositions, characterized in that active compound combinations according to Claim 1 are mixed with extenders and/or surface-active substances.

**Revendications**

1. Compositions fongicides, caractérisées par une teneur en une association de substances actives consistant en un composé de formule (I)

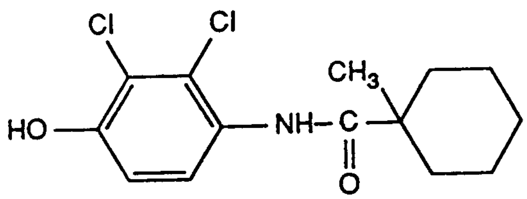

(I)

et

(A) du dichlofluanid de formule

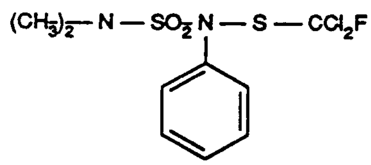

(II)

et/ou
(B) du tolylfluanid de formule

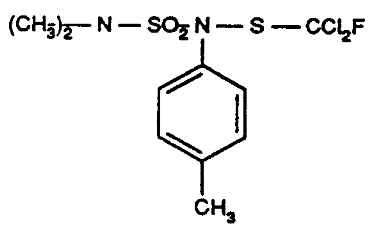

(III)

et/ou
(C) du tétrachlorisophtalodinitrile de formule

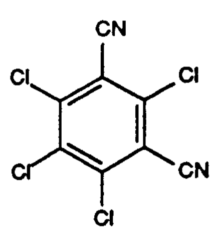

(IV)

(chlorothalonil)

et/ou
(D) du propinèbe de formule

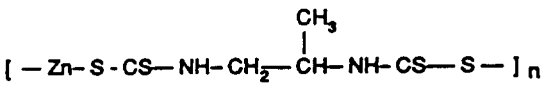 (V)

et/ou

(E) du disulfure de tétraméthylthiuram de formule

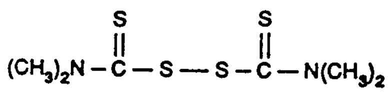 (VI)

(thirame)

et/ou

(F) du mancozèbe de formule

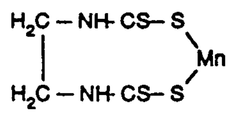 (VI)

et/ou

(G) de l'anilazine de formule

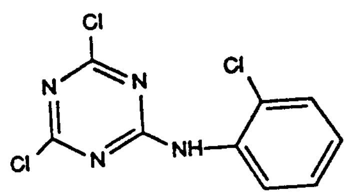 (VII)

et/ou

(H) des oxychlorures de cuivre

et/ou

(I) du captan de formule

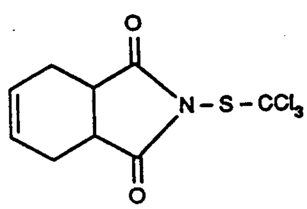 (VIII)

et/ou

(K) un dérivé de morpholine de formule

(Dimétomorphe)

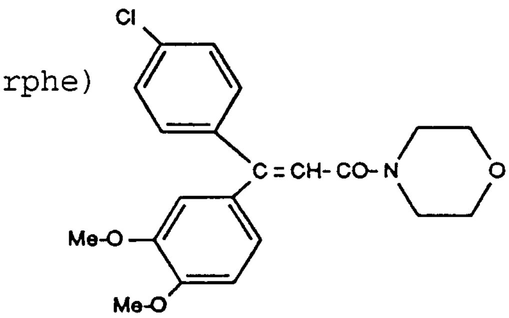

(IX)

et/ou

(L) du dithianon de formule

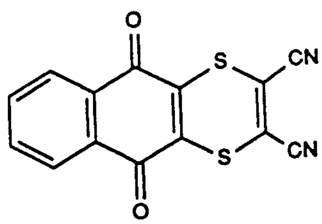

(X)

et/ou

(M) du phaltan de formule

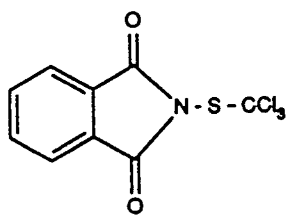

(XI)

et/ou

(N) du cymoxanil de formule

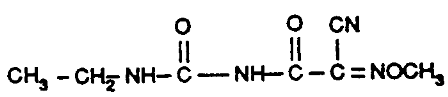

(XII)

et/ou

(O) de l'ester méthylique d'acide benzimidazole-2-carbamique de formule

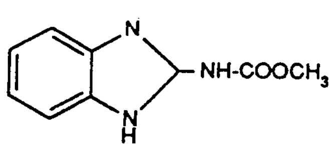

(XIII)

(Carbendazime)

et/ou (P) du fosétyl de formule

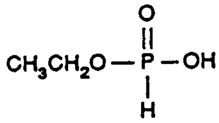
(XIV)

ou son produit d'addition d'aluminium
et/ou
(Q) du métalaxyl de formule

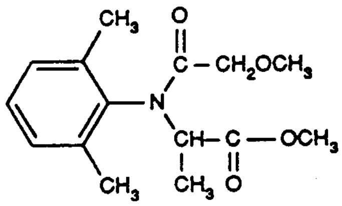
(XV)

et/ou
(R) de l'oxadixyl de formule

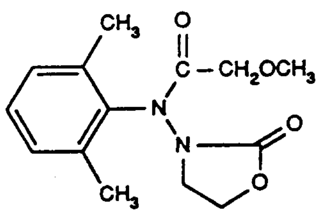
(XVI)

et/ou
(S) du fluaziname de formule

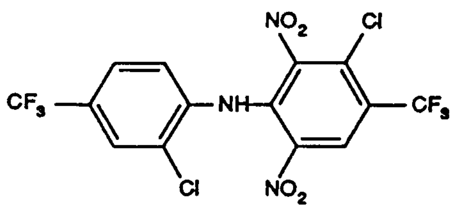
(XVII)

et/ou
(T) du 1-(4-chlorophényl)-4,4-diméthyl-3-(1,2,4-triazole-1-yl-éthyl)-pentane-3-ol de formule

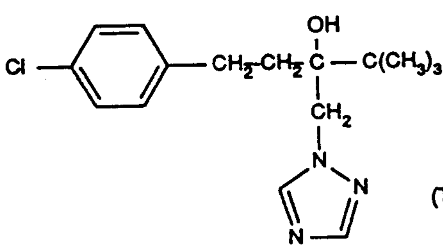
(XVIII)

(TEBUCONAZOLE)

et/ou
(U) un dérivé azolique de formule

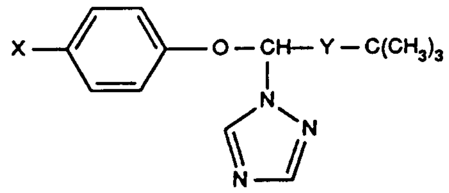

(XIX)

(XIX)= X = Cl; Y = -CH(OH)- (Triadiménol)

(XIX) X= 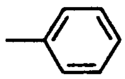 ; Y = -CH(OH)- (Bitertanol)

(XIX) X = Cl; Y = 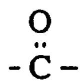 (Triadiméfon)

et/ou

(V) un dérivé azolique du groupe

a) Difenconazole
b) Penconazole
c) Flusilazole
d) Hexaconazole
e) Myclobutanil
f) Prochloraz

et/ou
(W) du métiram
et/ou
(X) du pyriméthanil
et/ou
(Y) du diéthofencarbe
et/ou
(Z) du mépanipyrim
et/ou
(α) du phénylpyrrole
et/ou
(β) de l'iprodione
et/ou
(γ) de la vinclozoline
et/ou
(δ) de la procymidone
et/ou
(ε) du bénomyl
et/ou
(ω) du thiophanateméthyl
et/ou
(Π) du soufre
et/ou
(η) des composés de formules

a) 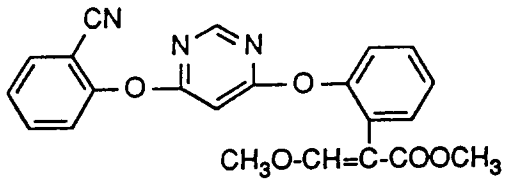

b) 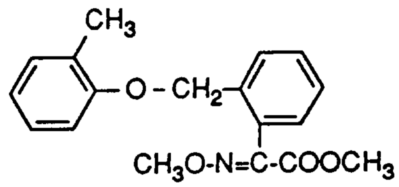

2. Compositions suivant la revendication 1, caractérisées en ce que dans les associations de substances actives, le rapport en poids de la substance active de formule (I)

- à la substance active du groupe (A) se situe entre 1:0,5 et 1:50,
- à la substance active du groupe (B) se situe entre 1:0,5 et 1:50,
- à la substance active du groupe (C) se situe entre 1:0,5 et 1:50,
- à la substance active du groupe (D) se situe entre 1:0,5 et 1:50,
- à la substance active du groupe (E) se situe entre 1:0,5 et 1:50,
- à la substance active du groupe (F) se situe entre 1:0,5 et 1:50,
- à la substance active du groupe (G) se situe entre 1:0,5 et 1:50,
- à la substance active du groupe (H) se situe entre 1:1 et 1:50,
- à la substance active du groupe (I) se situe entre 1:0,5 et 1:50,
- à la substance active du groupe (K) se situe entre 1:0,1 et 1:10,
- à la substance active du groupe (L) se situe entre 1:0,5 et 1:50,
- à la substance active du groupe (M) se situe entre 1:0,5 et 1:50,
- à la substance active du groupe (N) se situe entre 1:0,1 et 1:10,
- à la substance active du groupe (O) se situe entre 1:0,1 et 1:10,
- à la substance active du groupe (P) se situe entre 1:0,1 et 1:20,
- à la substance active du groupe (Q) se situe entre 1:0,1 et 1:10,
- à la substance active du groupe (R) se situe entre 1:0,1 et 1:10,
- à la substance active du groupe (S) se situe entre 1:0,1 et 1:10,
- à la substance active du groupe (T) se situe entre 1:0,01 et 1:10,
- à la substance active du groupe (U) se situe entre 1:0,01 et 1:10,
- à la substance active du groupe (V) se situe entre 1:0,01 et 1:10,
- à la substance active du groupe (W) se situe entre 1:0,5 et 1:50,
- à la substance active du groupe (X) se situe entre 1:0,1 et 1:10,
- à la substance active du groupe (Y) se situe entre 1:0,1 et 1:10,
- à la substance active du groupe (Z) se situe entre 1:0,1 et 1:10,
- à la substance active du groupe (α) se situe entre 1:0,1 et 1:10,
- à la substance active du groupe (β) se situe entre 1:0,1 et 1:20,
- à la substance active du groupe (γ) se situe entre 1:0,1 et 1:20,
- à la substance active du groupe (δ) se situe entre 1:0,1 et 1:20,
- à la substance active du groupe (ε) se situe entre 1:0,1 et 1:10,
- à la substance active du groupe (ω) se situe entre 1:0,1 et 1:10,
- à la substance active du groupe (Π) se situe entre 1:1 et 1:50,
- à la substance active du groupe (η) se situe entre 1:0,01 et 1:10,

3. Procédé pour combattre des champignons, caractérisé en ce qu'on fait agir des associations de substances actives suivant la revendication 1 sur les champignons et/ou sur leur milieu.

4. Utilisation d'associations de substances actives suivant la revendication 1 pour combattre des champignons.

5. Procédé de préparation de compositions fongicides, caractérisé en ce qu'on mélange des associations de substances actives suivant la revendication 1 avec des diluants et/ou des agents tensio-actifs.